# EUROPEAN PATENT APPLICATION

(11) **EP 2 902 188 A1**
(43) Date of publication of application: **05.08.2015**
(21) Application number: 13841349.7
(22) Date of filing: 27.09.2013
(51) Int. Cl.: B32B 7/02, B32B 5/24, E04F 13/07

(54) **FOAM-LAMINATED SHEET**

(30) Priority: 27.09.2012 JP 2012215084
(71) Applicant: Dai Nippon Printing Co., Ltd., Tokyo 162-8001 (JP)
(72) Inventor: NETSU, Yoshiaki, Tokyo 162-8001 (JP); YAMAUCHI, Satoshi, Tokyo 162-8001 (JP)
(74) Representative: Müller-Boré & Partner Patentanwälte PartG mbB
(86) International application number: PCT/JP2013/076287
(87) International publication number: WO 2014/051062

(57) **Abstract**

The main objective of the present invention is to provide a foam-laminated sheet having an excellent ability to follow the shifting of the underlying surface, and to provide a decorative plate using the laminated sheet. A foam-laminated sheet in which a foam resin layer is laminated on a fiber base material, wherein the foam-laminated sheet can be provided with an excellent ability to follow the shifting of the underlying surface when displacement from a first local maximum point to a second local maximum point of tensile strength is 1-5mem in the width direction as measured at a tensile speed of 3mm/min according to the sheet-tear-strength test method specified in JIS K7128-3.

## Description

### TECHNICAL FIELD

The present invention relates to a foamed layered sheet that is excellent in the ability to follow the positional displacement of backing. Further, the present invention relates to a decorative plate using the foamed layered sheet.

### BACKGROUND ART

Conventionally, as an interior finishing material for domestic houses, a decorative sheet (wallpaper) has been used, and decorativeness is imparted to the indoor space. Among the decorative sheets, a foamed layered sheet obtained by layering a foamed resin layer on a fibrous base material is widely prevalent because useful functions such as flexibility, design giving a three-dimensional sense, an unevenness absorbing power of a constructed surface, and temperature-keeping property can be imparted.

In the meantime, in the backing that is subjected to construction of a foamed layered sheet, there is always a joint (boundary) of the boards such as gypsum boards with each other. For example, in the planar part of the backing, there is a joint made by the ends of the boards. Also, in the corner part (internal angle at the corner) of the backing, there is a joint because the ends of the boards are assembled to be perpendicular to each other. In the joint of the backing, positional displacement may occur due to change with lapse of time of the architecture or an earthquake. For this reason, the foamed layered sheet will lose decorativeness due to generation of cracks in the resin layer unless the foamed layered sheet can follow the positional displacement of the joint of the backing. Therefore, it is assumed to be necessary that the foamed layered sheet is provided with an ability to follow the positional displacement of backing (hereafter referred to as "backing displacement following ability").

Conventionally, as a foamed layered sheet used as a decorative sheet, there is known a sheet having a layered structure in which a resin layer containing a foamed resin obtained by foaming a resin such as ethylene-vinyl acetate copolymer resin, acryl-based resin, or an olefin-based resin is layered on a fibrous base material (backing paper) (See Patent Documents 1 and 2). However, in conventional foamed layered sheets, sufficient studies have not been made from the viewpoint of being capable of providing an excellent backing displacement following ability. Actually, in recent years, there have been reported numerous cases in which the foamed decorative sheets were ruptured due to change with lapse of time of the architecture or shake caused by an earthquake. Backed up with the conventional art like this, when a foamed layered sheet provided with an excellent backing displacement following ability can be developed, the practical value thereof will be extremely high.

On the other hand, the foamed layered sheet is liable to be in contact with furniture, commodity articles, human bodies, and the like in daily life, so that the foamed layered sheet is used in an environment where scratches or scrapes are liable to be generated on the surface. For this reason, it is assumed to be desirable that the foamed layered sheet is also provided with a scratch resistance (abrasion resistance) in addition to an excellent backing displacement following ability. However, as described before, in a conventional art, even a technique for providing the foamed layered sheet with an excellent backing displacement following ability has not been established yet. Still more, the current state is that there has not been even a conjecture as to what properties should be designed to be provided in a foamed layered sheet sufficiently satisfying both the backing displacement following ability and the scratch resistance.

### PRIOR ART DOCUMENTS

### PATENT DOCUMENTS

Patent Document 1: Japanese Patent Laid-open Publication No. 2000-255011
Patent Document 2: Japanese Patent Laid-open Publication No. 2001-347611

### SUMMARY OF THE INVENTION

### PROBLEMS TO BE SOLVED BY THE INVENTION

A principal object of the present invention is to provide a foamed layered sheet having an excellent backing displacement following ability, as well as a decorative plate using the layered sheet.

### MEANS FOR SOLVING THE PROBLEM

The present inventors have conducted diligent studies in view of solving the above problems, whereupon they have found that a foamed layered sheet obtained by layering a foamed resin layer on a fibrous base material can be provided with an excellent backing displacement following ability when the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm. Also, they have found that the foamed layered sheet can also be provided with an excellent scratch resistance when a test result obtained by the surface-reinforced wallpaper performance specification defined by the Wallpaper Industry Association is in the fourth or higher class, in addition to the aforementioned physical properties. Further, they have found that a foamed layered sheet obtained by layering a foamed resin layer on a fibrous base material can be provided with both an excellent backing displacement following ability and an excellent scratch resistance when one kind or two or more kinds of resin component (1) selected from the group consisting of olefin copolymer containing at least α,β unsaturated carboxylic acid anhydride as a constituent comonomer and polyethylene, and one kind or two or more kinds of resin component (2) selected from the group consisting of olefin-carboxylic acid vinyl ester copolymer and olefin-α,β unsaturated carboxylic acid ester copolymer are used in combination. The present invention has been completed by further researches on the basis of such findings.

That is, the present invention provides the invention of embodiments set forth below.
Item 1. A foamed layered sheet obtained by layering a resin layer including at least a foamed resin layer on a fibrous base material, wherein
   the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm.
Item 2. The foamed layered sheet according to 1, wherein further a test result obtained by the surface-reinforced wallpaper performance specification defined by the Wallpaper Industry Association is in the fourth or higher class.
Item 3. The foamed layered sheet according to 1 or 2, wherein the resin layer contains two or more kinds of resin component selected from the group consisting of polyethylene, olefin-carboxylic acid vinyl ester copolymer, olefin-α,β unsaturated carboxylic acid ester copolymer, and olefin copolymer containing at least α,β unsaturated carboxylic acid anhydride as a constituent comonomer.
Item 4. The foamed layered sheet according to any one of 1 to 3, wherein the foamed resin layer contains one kind or two or more kinds of resin component (1) selected from the group consisting of olefin copolymer containing at least α,β unsaturated carboxylic acid anhydride as a constituent comonomer and polyethylene, and one kind or two or more kinds of resin component (2) selected from the group consisting of olefin-carboxylic acid vinyl ester copolymer and olefin-α,β unsaturated carboxylic acid ester copolymer.
Item 5. The foamed layered sheet according to any one of 1 to 4, wherein the foamed resin layer contains one kind or two or more kinds of resin component (1) selected from the group consisting of polyethylene and ethylene-maleic anhydride-methyl acrylate copolymer, and one kind or two or more kinds of resin component (2) selected from the group consisting of ethylene-vinyl acetate copolymer, ethylene-methyl methacrylate copolymer, and ethylene-methyl acrylate copolymer.
Item 6. The foamed layered sheet according to any one of 1 to 5, which is a decorative sheet for a wall surface or a ceiling surface.
Item 7. The foamed layered sheet according to any one of 1 to 6, wherein the resin layer has a layered structure obtained by disposing a non-foamed resin layer on an upper surface and/or lower surface of the foamed resin layer.
Item 8. The foamed layered sheet according to any one of 1 to 7, wherein the resin layer has a layered structure obtained by disposing a non-foamed resin layer, a foamed resin layer, a non-foamed resin layer, a picture pattern layer, and a surface protective layer in this order.
Item 9. A decorative plate obtained by pasting the foamed layered sheet according to any one of 1 to 8 onto an adherend.
Item 10. The decorative plate according to 9, which is a wall material or a ceiling material.
Item 11. Use of a foamed layered sheet obtained by layering a resin layer including at least a foamed resin layer on a fibrous base material, wherein the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm, as a decorative sheet.
Item 12. A method for producing a foamed layered sheet in which the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is I to 5 mm,
   the method comprising a step of using a non-foamed layered sheet in which a resin layer including at least a foaming agent-containing resin layer containing a resin component and a foaming agent is layered on a fibrous base material, and foaming the foaming agent-containing resin layer.
Item 13. A non-foamed layered sheet in which a resin layer including at least a foaming agent-containing resin layer containing a resin component and a foaming agent is layered on a fibrous base material, wherein,
   after the foaming agent-containing resin layer is foamed to form a foamed layered sheet, the foamed layered sheet satisfies conditions that the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm.
Item 14. The non-foamed layered sheet according to 13, wherein, after the foaming agent-containing resin layer is foamed to form the foamed layered sheet, the foamed layered sheet satisfies conditions such that a test result obtained by the surface-reinforced wallpaper performance specification defined by the Wallpaper Industry Association is in the fourth or higher class.
Item 15. A foamed layered sheet obtained by layering a resin layer including at least a foamed resin layer on a fibrous base material, wherein
   the foamed resin layer contains one kind or two or more kinds of resin component (1) selected from the group consisting of olefin copolymer containing at least α,β unsaturated carboxylic acid anhydride as a constituent comonomer and polyethylene, and at least one kind or two or more kinds of resin component (2) selected from the group consisting of olefin-carboxylic acid vinyl ester copolymer and olefin-α,β unsaturated carboxylic acid ester copolymer.
Item 16. The foamed layered sheet according to 15, wherein the foamed resin layer contains one kind or two or more kinds of resin component (1) selected from the group consisting of polyethylene and ethylene-maleic anhydride-methyl acrylate copolymer, and one kind or two or more kinds of resin component (2) selected from the group consisting of ethylene-vinyl acetate copolymer, ethylene-methyl methacrylate copolymer, and ethylene-methyl acrylate copolymer.
Item 17. The foamed layered sheet according 15 or 16, wherein the resin layer has a layered structure obtained by disposing a non-foamed resin layer on an upper surface and/or lower surface of the foamed resin layer.
Item 18. The foamed layered sheet according to any one of 15 to 17, wherein the resin layer has a layered structure obtained by disposing a non-foamed resin layer, a foamed resin layer, a non-foamed resin layer, a picture pattern layer, and a surface protective layer in this order.
Item 19. A decorative plate obtained by pasting the foamed layered sheet according to any one of 15 to 18 onto an adherend.
Item 20. The decorative plate according to 19, which is a wall material or a ceiling material.
Item 21. Use of a foamed layered sheet obtained by layering a resin layer including at least a foamed resin layer on a fibrous base material, wherein the foamed resin layer contains one kind or two or more kinds of resin component (1) selected from the group consisting of olefin copolymer containing at least α,β unsaturated carboxylic acid anhydride as a constituent comonomer and polyethylene, and at least one kind or two or more kinds of resin component (2) selected from the group consisting of olefin-carboxylic acid vinyl ester copolymer and olefin-α,β unsaturated carboxylic acid ester copolymer, as a decorative sheet.
Item 22. A non-foamed layered sheet in which a resin layer including at least a foaming agent-containing resin layer containing a resin component and a foaming agent is layered on a fibrous base material, wherein
   the resin component contains one kind or two or more kinds of resin component (1) selected from the group consisting of olefin copolymer containing at least α,β unsaturated carboxylic acid anhydride as a constituent comonomer and polyethylene, and at least one kind or two or more kinds of resin component (2) selected from the group consisting of olefin-carboxylic acid vinyl ester copolymer and olefin-α,β unsaturated carboxylic acid ester copolymer.
Item 23. A method for producing a foamed layered sheet, comprising a step of using a non-foamed layered sheet in which a resin layer including at least a foaming agent-containing resin layer containing a resin component and a foaming agent is layered on a fibrous base material, and foaming the foaming agent-containing resin layer, wherein
   the resin component contains one kind or two or more kinds of resin component (1) selected from the group consisting of olefin copolymer containing at least α,β unsaturated carboxylic acid anhydride as a constituent comonomer and polyethylene, and at least one kind or two or more kinds of resin component (2) selected from the group consisting of olefin-carboxylic acid vinyl ester copolymer and olefin-α,β unsaturated carboxylic acid ester copolymer.

### ADVANTAGES OF THE INVENTION

According to one embodiment (foamed layered sheet (I)) of the foamed layered sheets of the present invention, an excellent backing displacement following ability is provided because the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm. Therefore, even when a positional displacement of some degree is generated in the joint of the backing by change with lapse of time of the architecture or an earthquake, the foamed layered sheet can follow the positional displacement of backing and can suppress breakage of the foamed layered sheet caused by generation of cracks in the resin layer. Further, the foamed layered sheet can be provided with an excellent scratch resistance when a test result obtained by the surface-reinforced wallpaper performance specification defined by the Wallpaper Industry Association is in the fourth or higher class, in addition to the aforementioned physical properties. Therefore, even when the foamed layered sheet comes into contact with furniture, commodity articles, human bodies, and the like, the foamed layered sheet can suppress scratches or scrapes from being generated on the surface.

Moreover, according to another embodiment (foamed layered sheet (II)) of the foamed layered sheets of the present invention, both an excellent backing displacement following ability and an excellent scratch resistance can be provided by forming the foamed resin layer using a combination of specific resin components. Further, the foamed layered sheet of such an embodiment can also be provided with an excellent stain resistance, so that the foamed layered sheet can be suitably used as a decorative sheet for a wallpaper.

### BRIEF DESCRIPTION OF THE DRAWINGS

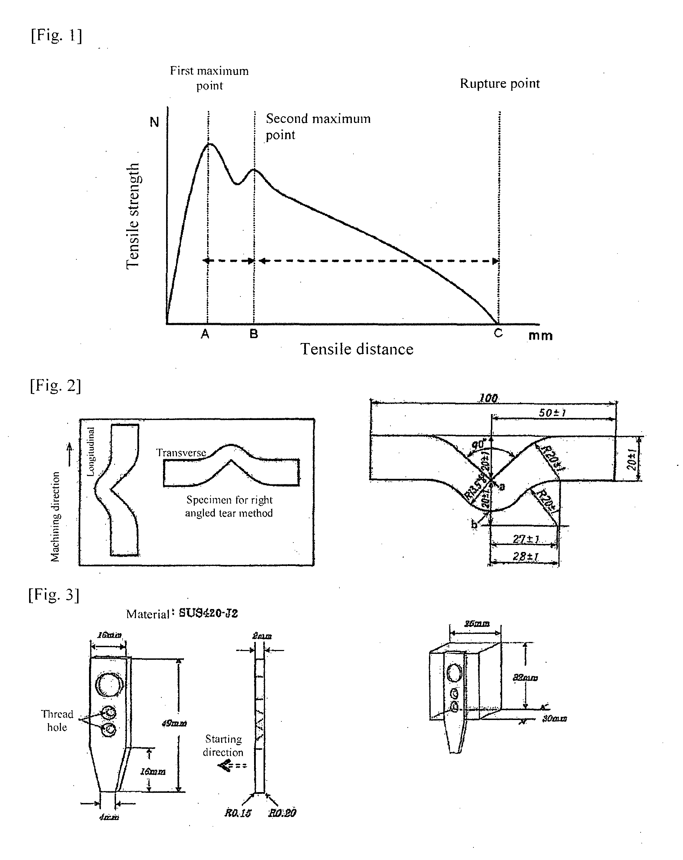

Fig. 1 shows an example of a chart (the horizontal axis: tensile distance, the vertical axis: tensile strength) obtained in the case where a layered sheet obtained by layering a foamed resin layer on a fibrous base material is subjected to the testing method for tear strength of sheeting defined in JIS K7128-3.
Fig. 2 is a figure showing a sampling direction of a specimen to be subjected to the testing method for tear strength of sheeting defined in JIS K7128-3 (the figure on the left) and the shape of a specimen (the figure on the right). In this connection, the unit of numerical values showing the dimensions of the shape of a specimen shown in the figure on the right is "mm".
Fig. 3 is a figure showing a claw of a frictioner (the figure on the left) and a holder (the figure on the right) mounted on a friction tester II type in evaluating the scratch resistance.

### EMBODIMENTS OF THE INVENTION

### 1. Foamed layered sheet (I)

The foamed layered sheet according to the present invention is a foamed layered sheet obtained by layering a foamed resin layer on a fibrous base material, wherein the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm. In the present specification, the foamed layered sheet may be denoted as "foamed layered sheet (I)". Hereafter, the foamed layered sheet (I) will be described in detail.

### Physical properties

### (Tear strength)

In the foamed layered sheet (I) according to the present invention, the displacement from the first maximum point of the tensile strength in the width direction to the second maximum point thereof when measured at a tensile speed of 3 mm/minute in the testing method for tear strength of sheeting defined in JIS K7128-3 is 1 to 5 mm. By satisfying such a tear strength, an excellent backing displacement following ability can be provided, and generation of cracks can be suppressed even when a positional displacement is generated in the joint of the backing. On the other hand, when the displacement exceeds 5 mm, the crack resistance may decrease, or the foamed layered sheet becomes more liable to be elongated than necessary, whereby the pasting position tends to be shifted at the time of construction. From the viewpoint of improving the backing displacement following ability to a further more extent, the displacement is preferably 1 to 3 mm, more preferably 1.1 to 3.0, and still more preferably 1.2 to 3.0.

In this connection, in the testing method for tear strength, the tensile strength in the width direction refers to the tensile strength in the width direction (namely, widthwise tensile) of a fibrous base material used as a base material. The width direction of the fibrous base material refers to the direction perpendicular to the fiber arrangement direction of the fibrous base material, and it can be determined by visual observation or measuring the underwater elongation (the underwater elongation in the width direction is larger than that in the longitudinal direction).

Moreover, the displacement from the first maximum point of the tensile strength in the width direction to the second maximum point thereof refers to the distance from the point of tensile distance at which firstly the tensile strength shows the maximum value (the first maximum point) to the point of tensile distance at which secondly the tensile strength shows the maximum value (the second maximum point) in the figure obtained when the testing method for tear strength is performed and the tensile distance and tensile strength are taken as the horizontal axis and vertical axis to be plotted. The first maximum point refers to the point at which rupture of the fibrous base material starts and the second maximum point refers to the point at which rupture of the resin layer starts. For example, when a foamed layered sheet obtained by layering a foamed resin layer on the fibrous base material is subjected to the testing method for tear strength, such a chart (the horizontal axis: tensile distance, the vertical axis: tensile strength) shown in Figure 1 is obtained and the distance from A (the rupture starting point of the fibrous base material) to B (the rupture starting point of the resin layer) shown in Figure 1 corresponds to the displacement from the first maximum point to the second maximum point. In this connection, in Figure 1, Point C represents the rupture point at which the foamed layered sheet is completely ruptured. In other words, the displacement from the first maximum point to the second maximum point corresponds to a stress range where the state in which the resin layer is not ruptured can be maintained even when the fibrous base material is ruptured by positional displacement of backing. In the present invention, the displacement is used as an index of an effect of suppressing generation of breakage such as cracks when the positional displacement of backing is generated.

In this connection, the testing method for tear strength is performed by cutting the foamed layered sheet into a shape defined in JIS K7128-3. Moreover, specifically, the testing method for tear strength of sheeting defined in JIS K7128-3 is performed under the conditions described in the section of Examples mentioned below. In this connection, in the testing method for tear strength, the distance between grippers of the sheet subjected to measurement does not affect the measurement values, so that the set value thereof is not particularly limited.

### (Surface strength)

In the foamed layered sheet (I) according to the present invention, it is preferable that a test result obtained by the surface-reinforced wallpaper performance specification defined by the Wallpaper Industry Association is in the fourth or higher class, in addition to satisfaction of the aforementioned tear strength. By satisfying such a surface strength, an excellent scratch resistance can be provided, and the wound possibly generated in daily life can be effectively suppressed.

In this connection, the state in which a test result obtained by a test in the surface-reinforced wallpaper performance specification is in the fourth or higher class refers to a state in which the test result is in the fourth or higher class both in the longitudinal direction and in the transverse direction. Also, here, the "longitudinal direction" and the "transverse direction" have the same meaning as the "longitudinal direction" and the "width direction", respectively, in the testing method for tear strength.

The foamed layered sheet (I) that satisfies the above-mentioned surface strength or the foamed layered sheet (I) that satisfies the above-mentioned tear strength and, as necessary, the above-mentioned surface strength, is prepared by appropriately adjusting the composition, the thickness, and the like of the fibrous base material and the resin layer configuring the foamed layered sheet. Above all, the physical properties of the foamed resin layer in the resin layer greatly contribute to satisfaction of the tear strength and the surface strength. Therefore, the foamed layered sheet (I) according to the present invention is prepared by appropriately adjusting the composition and the thickness of the foamed resin layer so as to satisfy the tear strength and, as necessary, the surface strength, upon selection of the fibrous base material.

### Layered structure

The foamed layered sheet (I) according to the present invention has a layered structure obtained by layering a resin layer including at least a foamed resin layer on a fibrous base material.

In the foamed layered sheet (I) according to the present invention, the resin layer needs only to include at least a foamed resin layer and may be a layered structure having one or a plurality of layers other than the foamed resin layer as long as the above-mentioned tear strength and, as necessary, the above-mentioned surface strength are satisfied.

For example, in order to enhance the adhesiveness of the resin layer to the fibrous base material, as necessary, a non-foamed resin layer B may be formed between the base material and the foamed resin layer.

Moreover, on the upper surface of the foamed resin layer (the face opposite to the fibrous base material), for the purpose of imparting designability to the foamed layered sheet, a picture pattern layer may be formed as necessary. Furthermore, for the purpose of vivifying the picture pattern or enhancing the scratch resistance of the foamed resin layer, as necessary, a non-foamed resin layer A may be formed on the upper surface of the foamed resin layer (the face opposite to the fibrous base material) or between the foamed resin layer and the picture pattern layer in the case where the picture pattern layer is formed.

Moreover, in the case where the picture pattern layer is formed, in view of imparting stain resistance, the control of the luster on the surface of the picture pattern layer, the protection of the picture pattern layer and the like, a surface protective layer may be provided on the upper surface of the picture pattern layer.

In this way, the foamed layered sheet (I) according to the present invention may include at least one layer selected from the group consisting of the non-foamed resin layer B, the non-foamed resin layer A, the picture pattern layer, and the surface protective layer, as resin layers, other than the foamed resin layer, as necessary. That is, one example of the layered structure in the foamed layered sheet (I) includes a layered structure having a stack of fibrous base material/non-foamed resin layer B provided as necessary/foamed resin layer/non-foamed resin layer A provided as necessary/picture pattern layer provided as necessary/surface protective layer provided as necessary in this order. In particular, a suitable example of the layered structure in the foamed layered sheet (I) includes a layered structure having a stack of fibrous base material/non-foamed resin layer B/foamed resin layer/non-foamed resin layer A/picture pattern layer/surface protective layer in this order.

Moreover, to the surface of the opposite side to the fibrous base material in the foamed layered sheet (I) according to the present invention, an uneven pattern by emboss processing may be applied in order to impart designability.

Hereinafter, the composition of each layer configuring the foamed layered sheet (I) according to the present invention and the forming method thereof will be described.

### [Fibrous base material]

As the fibrous base material used in the present invention, a material usually employed as a wallpaper base may be used. Moreover, in the fibrous base material, a flame retardant, an inorganic agent, a dry paper strengthening agent, a wet paper strengthening agent, a coloring agent, a sizing agent, a fixing agent, and the like may be contained as necessary. Specifically, examples of the fibrous base material include a general wallpaper base (one prepared by subjecting a sheet made mainly of pulp to a sizing treatment with a sizing agent), a flame retardant paper (one prepared by treating a sheet made mainly of pulp with a flame retardant such as guanidine sulfamate or guanidine phosphate); an inorganic material-containing paper containing an inorganic additive such as aluminum hydroxide or magnesium hydroxide; a woodfree paper; a tissue paper, and a fiber mixed paper (one prepared by mixing a synthetic fiber and pulp and subjecting the mixture to papermaking). In this connection, one corresponding to a nonwoven fabric when classified is also included in the fibrous base material used in the present invention.

Although the basis weight of the fibrous base material is not particularly restricted, it is for example about 50 to 300 g/m², preferably about 50 to 120 g/m².

### [Resin layer]

The resin layer is provided on the upper surface of the fibrous base material and is a layer including at least the foamed resin layer. The resin layer may be a single layer structure made of the foamed resin layer alone, and moreover, it may be a layered structure including at least one layer selected from the group consisting of the non-foamed resin layer B, the non-foamed resin layer A, the picture pattern layer and the surface protective layer, other than the foamed resin layer.

The mass per unit area of the resin layer and the density of each layer configuring the resin layer are appropriately set according to the kind of a resin component to be used, the number of layers other than the foamed resin layer, and the like. From the viewpoint of allowing the sheet to satisfy the above-mentioned tear strength, and further, from the viewpoint of allowing the sheet to satisfy both of the above-mentioned tear strength and surface strength, the mass per unit area of the resin layer may be, for example, 70 to 110 g/m², preferably 72 to 100 g/m², and the density of the resin layer (whole) may be, for example, 0.1 to 0.3 g/cm³, preferably 0.12 to 0.28 g/cm³.

Although the thickness of the resin layer may be appropriately set within such a range that the sheet is allowed to satisfy the above-mentioned tear strength and, as necessary, the above-mentioned surface strength, according to the kind of a resin component to be used, the number of layers other than the foamed resin layer, and the like, the thickness may be, for example, 300 to 1500 µm, preferably 400 to 800 µm.

### (1) Foamed resin layer

The foamed resin layer is an essential layer included in the resin layer and is formed by allowing a foaming agent-containing resin layer containing a resin component and a foaming agent to foam.

### (Resin component)

The resin component used for the foamed resin layer is not particularly restricted as long as the foamed layered sheet (I) according to the present invention can satisfy the above-mentioned tear strength and, as necessary, the above-mentioned surface strength. However, the resin component may be, for example, 1) polyethylene or 2) an olefin-based resin containing, as a constituent comonomer, at least one kind selected from the group consisting of carboxylic acid vinyl ester, α,β unsaturated carboxylic acid, α,β unsaturated carboxylic acid ester, and α,β unsaturated carboxylic acid anhydride. Hereinafter, the above-mentioned 1) polyethylene and 2) olefin-based resin will be described.

### 1) Polyethylene

The above-mentioned polyethylene may be a homopolymer of ethylene or may be a copolymer of ethylene and α-olefin. Although the α-olefin used as a comonomer of the copolymer is appropriately set according to the density to be imparted to the polyolefin and the like, the α-olefin may be, for example, one kind or a combination of two or more kinds selected from among straight-chain or branched α-olefins with 3 to 20 carbon atoms, preferably 3 to 8 carbon atoms.

Specific examples of the above-mentioned polyethylene include high density polyethylene (HDPE) with a density of not less than 0.942 g/cm³, medium density polyethylene (MDPE) with a density of not less than 0.93 g/cm³ and less than 0.942 g/cm³, low density polyethylene (LDPE) with a density of not less than 0.91 g/cm³ and less than 0.93 g/cm³, and linear low density polyethylene (LLDPE) with a density of not less than 0.85 g/cm³ and less than 0.93 g/cm³. These polyethylenes may be used alone or may be used in combination of two or more thereof. Among these polyethylenes, from the viewpoint of allowing the sheet to satisfy both of the above-mentioned tear strength and surface strength, low density polyethylene and linear low density polyethylene can be raised as preferable examples, and linear low density polyethylene can be raised as a more preferable example.

Specific examples of the above-mentioned linear low density polyethylene include those containing straight-chain or branched α-olefin with 3 to 20 carbon atoms, preferably 3 to 8 carbon atoms, as a comonomer. Specific examples of the comonomer in the linear low density polyethylene include propylene, 1-butene, 1-pentene, 1-hexene, 4-methylpentene-1, 1-octene, 1-decene, and 1-dodecene. These comonomers may be used alone or may be used in combination of two or more thereof.

### 2) Olefin-based resin

The above-mentioned olefin-based resin is a resin obtained by polymerizing an olefin-based monomer and at least one kind of a comonomer selected from the group consisting of carboxylic acid vinyl ester, α,β unsaturated carboxylic acid, α,β unsaturated carboxylic acid ester, and α,β unsaturated carboxylic acid anhydride.

Although the above-mentioned olefin-based monomer is not particularly restricted, the olefin-based monomer may be, for example, an olefin with 2 to 12 carbon atoms, preferably an olefin with 2 to 8 carbon atoms. More specific examples thereof include olefins such as ethylene, propylene, 1-butene, 1-pentene, 1-hexene, 4-methylpentene-1, 1-octene, 1-decene, and 1-dodecene, as an olefin-based monomer used in the above olefin-based resin. Among these olefin-based monomers, a preferable example is ethylene. These olefin-based monomers may be used alone or may be used in combination of two or more thereof.

Specific examples of the carboxylic acid vinyl ester include vinyl acetate. Specific examples of the α,β unsaturated carboxylic acid include acrylic acid and methacrylic acid. Specific examples of the α,β unsaturated carboxylic acid ester include methyl acrylate and methyl methacrylate. The α,β unsaturated carboxylic acid anhydride may be any of hybrid acid anhydride obtained by dehydration condensation of two different unsaturated carboxylic acids, symmetric acid anhydride obtained by dehydration condensation of two molecules of the same unsaturated carboxylic acid, and intramolecular cyclic anhydride obtained by dehydration condensation of two carboxyl groups in one molecule of unsaturated carboxylic acid having the two carboxyl groups, and specific examples thereof include maleic anhydride, itaconic anhydride, and citraconic anhydride.

Among these comonomers, from the viewpoint of allowing the sheet to satisfy both of the above-mentioned tear strength and surface strength, carboxylic acid vinyl ester, α,β unsaturated carboxylic acid ester, and α,β unsaturated carboxylic acid anhydride are preferred. In particular, as the carboxylic acid vinyl ester, vinyl acetate is further preferred; as the α,β unsaturated carboxylic acid ester, methyl acrylate and methyl methacrylate are further preferred; and, as the α,β unsaturated carboxylic acid anhydride, intramolecular cyclic anhydride of unsaturated carboxylic acid is further preferred, and maleic anhydride is particularly preferred.

These comonomers may be used alone or may be used in combination of two or more thereof.

Specific examples of the above-mentioned olefin-based resin include olelin-carboxylic acid vinyl ester copolymer, olefin-α,β unsaturated carboxylic acid copolymer, olefin-unsaturated carboxylic acid ester copolymer, and olefin copolymer containing at least α,β unsaturated carboxylic acid anhydride as a constituent comonomer (which may hereinafter denoted as "unsaturated carboxylic acid anhydride copolymer"). Further, examples of the above-mentioned unsaturated carboxylic acid anhydride copolymer include olefin-α,β unsaturated carboxylic acid anhydride copolymer and olefin-α,β unsaturated carboxylic acid ester-α,β unsaturated carboxylic acid anhydride copolymer, and olefin-α,β unsaturated carboxylic acid ester-α,β unsaturated carboxylic acid anhydride copolymer is preferred. In this connection, in the unsaturated carboxylic acid anhydride copolymer, the α,β unsaturated carboxylic acid anhydride may constitute a main chain or may constitute a graft chain.

More specific examples of the above-mentioned olefin-based resin include ethylene-vinyl acetate copolymer (EVA), ethylene-methyl methacrylate copolymer (EMMA), ethylene-ethyl acrylate copolymer (EEA), ethylene-methyl acrylate copolymer (EMA), ethylene-(meth)acrylic acid copolymer (EMAA), methylene-olefin copolymer, and ethylene-maleic anhydride-methyl acrylate copolymer. In this connection, in the present specification, "(meth)acrylic acid" means acrylic acid or methacrylic acid. These ethylene copolymers may be used alone or may be used in combination of two or more thereof.

Among these olefin-based resins, from the viewpoint of allowing the sheet to satisfy the above-mentioned tear strength, and further, from the viewpoint of allowing the sheet to satisfy both of the above-mentioned tear strength and surface strength, ethylene-carboxylic acid vinyl ester copolymer, ethylene-unsaturated carboxylic acid ester copolymer, and unsaturated carboxylic acid anhydride-containing ethylene copolymer are preferred, and ethylene-vinyl acetate copolymer, ethylene-methyl methacrylate copolymer, ethylene-methyl acrylate copolymer, and ethylene-maleic anhydride-methyl acrylate copolymer are further preferred.

Moreover, in the olefin-based resin, although the ratio of the olefin-based monomer to the comonomer may be appropriately set according to the kinds thereof, for example, the content of the comonomer is usually 5 to 42% by mass, preferably 10 to 35% by mass, per total mass of the olefin-based resin.

### (Suitable resin component)

As the resin component that forms the foamed resin layer, from the viewpoint of allowing the foamed layered sheet (I) according to the present invention to satisfy the above-mentioned tear strength, and further, from the viewpoint of allowing the sheet to satisfy both of the above-mentioned tear strength and surface strength, a combination of two or more kinds selected from among the above-mentioned 1) polyethylene and the above-mentioned 2) olefin-based resins is preferred; a combination of two or more kinds selected from among polyethylene, olefin-carboxylic acid vinyl ester copolymer, olefin-α,β unsaturated carboxylic acid ester copolymer, and unsaturated carboxylic acid anhydride copolymer is further preferred; and a combination of two or more kinds selected from among polyethylene, ethylene-carboxylic acid vinyl ester copolymer, ethylene-unsaturated carboxylic acid ester copolymer, and ethylene copolymer containing α,β unsaturated carboxylic acid anhydride as a constituent comonomer is particularly preferred.

A specific example of the above-mentioned combination of two or more kinds of resin components is a combination of at least one kind of a resin component (1) selected from the group consisting of polyethylene and unsaturated carboxylic acid anhydride copolymer and at least one kind of a resin component (2) selected from the group consisting of olefin-carboxylic acid vinyl ester copolymer and olefin-α,β unsaturated carboxylic acid ester copolymer. A more suitable specific example thereof is a combination of at least one kind of a resin component (1) selected from the group consisting of polyethylene and ethylene-unsaturated carboxylic acid ester-unsaturated carboxylic acid anhydride copolymer and at least one kind of a resin component (2) selected from the group consisting of ethylene-carboxylic acid vinyl ester copolymer and ethylene-unsaturated carboxylic acid ester copolymer. A particularly suitable specific example thereof is a combination of at least one kind of a resin component (1) selected from the group consisting of polyethylene and ethylene-maleic anhydride-methyl acrylate copolymer and at least one kind of a resin component (2) selected from the group consisting of ethylene-vinyl acetate copolymer, ethylene-methyl methacrylate copolymer, and ethylene-methyl acrylate copolymer. In this way, by combining the above-mentioned resin components (1) and (2), the foamed layered sheet (I) can be further provided with an excellent stain resistance in addition to being capable of more effectively satisfying both of the above-mentioned tear strength and surface strength.

In particular, among the above-mentioned combinations of the resin components (1) and (2), as one suitable embodiment, a combination of polyethylene and olefin-carboxylic acid vinyl ester copolymer is preferred; a combination of polyethylene and ethylene-carboxylic acid vinyl ester copolymer is further preferred; and a combination of linear low density polyethylene and ethylene-vinyl acetate copolymer is particularly preferred.

Further, among the above-mentioned combinations of the resin components (1) and (2), as another suitable embodiment, a combination of unsaturated carboxylic acid anhydride copolymer and olefin-α,β unsaturated carboxylic acid ester copolymer and/or olefin-carboxylic acid vinyl copolymer is preferred; a combination of ethylene copolymer containing α,β unsaturated carboxylic acid anhydride as a constituent comonomer and ethylene-α,β unsaturated carboxylic acid ester copolymer and/or ethylene-carboxylic acid vinyl copolymer is further preferred; and a combination of ethylene-maleic anhydride-methyl acrylate copolymer and ethylene-methyl methacrylate copolymer, a combination of ethylene-maleic anhydride-methyl acrylate copolymer and ethylene-methyl acrylate copolymer, and a combination of ethylene-maleic anhydride-methyl acrylate copolymer and ethylene-vinyl acetate copolymer are particularly preferred.

In the case where the combination of the resin components (1) and (2) is employed as the resin component of the foamed resin layer, although the ratio of these may be appropriately set, from the viewpoint of allowing the sheet to satisfy both of the above-mentioned tear strength and surface strength, the content of the resin component (2) may be, for example, 100 to 1000 parts by mass, preferably 150 to 250 parts by mass, per 100 parts by mass of the resin component (1).

More specifically, in the case where the combination of polyethylene and olefin-carboxylic acid vinyl ester copolymer is employed, the content of the olefin-carboxylic acid vinyl ester copolymer may be 100 to 1000 parts by mass, preferably 150 to 200 parts by mass, per 100 parts by mass of the polyethylene. Further, in the case where the combination of unsaturated carboxylic acid anhydride copolymer and olefin-α,β unsaturated carboxylic acid ester copolymer is employed, the content of the ethylene-α,β unsaturated carboxylic acid ester copolymer may be 60 to 900 parts by mass, preferably 100 to 250 parts by mass, per 100 parts by mass of the unsaturated carboxylic acid anhydride copolymer. Furthermore, in the case where the combination of unsaturated carboxylic acid anhydride copolymer and olefin-carboxylic acid vinyl ester copolymer is employed, the content of the olefin-carboxylic acid vinyl ester copolymer may be 60 to 900 parts by mass, preferably 100 to 250 parts by mass, per 100 parts by mass of the unsaturated carboxylic acid anhydride copolymer.

### (Content of resin component)

Although the content of the resin component in the foamed resin layer is appropriately set in view of the kind and the combination of resin components to be used, from the viewpoint of allowing the sheet to satisfy the above-mentioned tear strength, and further, from the viewpoint of allowing the sheet to satisfy both of the above-mentioned tear strength and surface strength, the total content of the resin components is usually 50 to 80% by mass, preferably 55 to 70% by mass, relative to the total mass of the foamed resin layer.

### (Foaming agent)

The foaming agent used for the foamed resin layer is not particularly restricted and can be selected from known foaming agents. Examples thereof include organic decomposable foaming agents such as azo-based agents including azodicarbonamide (ADCA) and azobisformamide; and hydrazide-based agents including oxybenzenesulfonyl hydrazide (OBSH) and p-toluenesulfonyl hydrazide; a microcapsule type foaming agent; and an inorganic foaming agent such as sodium bicarbonate. These foaming agents may be used alone or may be used in combination of two or more thereof.

The content of the foaming agent can be appropriately set according to the kind of the foaming agent, the expansion ratio, and the like. The foaming agent may be one having an expansion ratio of 7 times or more, preferably about 7 to 10 times, and for example, the content of the foaming agent may be set to about 1 to 20 parts by mass relative to 100 parts by mass of the resin component.

### (Other additives)

In the foamed resin layer, in order to enhance the foaming effect of the foaming agent, a foaming auxiliary may be contained as necessary. Although the foaming auxiliary is not particularly restricted, examples thereof include a metal oxide and a fatty acid metal salt. Further specifically, examples thereof include zinc stearate, calcium stearate, magnesium stearate, zinc octoate, calcium octoate, magnesium octoate, zinc laurate, calcium laurate, magnesium laurate, zinc oxide, and magnesium oxide. These foaming auxiliaries may be used alone or may be used in combination of two or more thereof. Although the content of these foaming auxiliaries can be appropriately set according to the kinds of the foaming auxiliaries, the kind of the foaming agent and the content thereof, and the like, the content is for example about 0.3 to 10 parts by mass, preferably about 1 to 5 parts by mass, relative to 100 parts by mass of the resin component.

Moreover, in the foamed resin layer, in view of imparting flame retardance, suppressing the occurrence of an unwanted rift in wallpaper, enhancing the surface strength, and the like, an inorganic filler may be contained as necessary. Although the inorganic filler is not particularly restricted, examples thereof include calcium carbonate, aluminum hydroxide, magnesium hydroxide, antimony trioxide, zinc borate, and a molybdenum compound. These inorganic fillers may be used alone or may be used in combination of two or more thereof.

Moreover, in the foamed resin layer, a pigment may be contained as necessary. The pigment is not particularly restricted and either of an inorganic pigment and an organic pigment is acceptable. Examples of the inorganic pigment include titanium oxide, zinc flower, carbon black, black iron oxide, yellow iron oxide, chrome yellow, molybdenum orange, cadmium yellow, nickel titanium yellow, chromium titanium yellow, iron oxide (red iron oxide), cadmium red, ultramarine blue, Prussian blue, cobalt blue, chromium oxide, cobalt green, aluminum powder, bronze powder, titanated mica, and zinc sulfide. Examples of the organic pigment include aniline black, perylene black, azo-based pigments (azo lake, insoluble azo, condensed azo), and polycyclic pigments (isoindolinone, isoindoline, quinophthalone, perinone, flavanthrone, anthrapyrimidine, anthraquinone, quinacridone, perylene, diketopyrrolopyrrole, dibromoanzanthrone, dioxazine, thioindigo, phthalocyanine, indanthrone, halogenated phthalocyanine). These pigments may be used alone or may be used in combination of two or more thereof.

Since there is a tendency that the foamed resin layer is liable to be brittle and the sheet satisfies the above-mentioned tear strength and surface strength with difficulty as the content of the inorganic filler and/or pigment increases, the content of the inorganic filler and/or pigment is appropriately set within such a range that the sheet can satisfy the above-mentioned tear strength and, as necessary, the above-mentioned surface strength. Specifically, with regard to the content of the inorganic filler and/or pigment, the total amount thereof is about 0 to 80 parts by mass, preferably about 10 to 70 parts by mass, relative to 100 parts by mass of the resin component.

Furthermore, in the foamed resin layer, as long as the sheet can satisfy the above-mentioned tear strength and, as necessary, the above-mentioned surface strength, additives such as an oxidation inhibitor, a crosslinking agent, a crosslinking auxiliary, and a surface treatment agent may be contained as necessary.

### (Crosslinking of foamed resin layer)

In order to allow the foamed layered sheet (I) according to the present invention to have the above-mentioned tear strength and, as necessary, the above-mentioned surface strength, the foamed resin layer is preferably crosslinked. In order to crosslink the foamed resin layer, for example, it needs only to allow a foaming agent-containing resin layer before foaming to be previously subjected to a crosslinking treatment and then allow the foaming agent-containing resin layer to foam. Specific examples of a method of the crosslinking treatment include electron beam crosslinking and chemical crosslinking, and electron beam crosslinking is preferred. The conditions under which the electron beam crosslinking is performed are specifically exemplified by a method of setting the acceleration voltage to 100 to 300 kV, preferably 100 to 200 kV, and setting the irradiation amount to 2 to 100 kGy, preferably 2.5 to 70 kGy, thereby performing an electron beam irradiation treatment. Moreover, the conditions under which the chemical crosslinking is performed are specifically exemplified by a method of allowing an organic peroxide such as dicumyl peroxide to be contained in the foaming agent-containing resin layer, thereby performing a heat treatment for 5 to 10 minutes as the heating time at a temperature of about 160 to 180°C.

### (Thickness of foamed resin layer)

Although the thickness of the foamed resin layer may be appropriately set within such a range that the sheet can satisfy the above-mentioned tear strength and, as necessary, the above-mentioned surface strength, the thickness is, for example, 160 µm to 1.2000 µm, preferably 300 to 700 µm. The thickness before foaming of the foamed resin layer (namely, the thickness of the foaming agent-containing resin layer) is, for example, 40 to 120 µm.

### (Method of forming foamed resin layer)

The foamed resin layer may be formed by using a resin composition containing a resin component, a foaming agent, and, as necessary, other additives and applying the resin composition on a fibrous base material or alternatively, when a non-foamed resin layer B is provided, applying the resin composition on the non-foamed resin layer B. Although the method of forming the foamed resin layer is not particularly restricted, the method is preferably a method of forming the layer by melt-molding, further preferably a method of forming the layer by extrusion with a T-die extruder.

### (2) Non-foamed resin layer B (Adhesive resin layer)

The non-foamed resin layer B is an adhesive resin layer formed on the lower surface of the foamed resin layer (the face to be brought into contact with the fibrous base material) as necessary, for the purpose of enhancing the adhesive force between the fibrous base material and the foamed resin layer, as the layer configuring the resin layer.

The resin component of the non-foamed resin layer B is not particularly restricted as long as the sheet can satisfy the above-mentioned tear strength and, as necessary, the above-mentioned surface strength, and a resin component capable of enhancing the adhesive force between the fibrous base material and the foamed resin layer can be appropriately selected for use. Examples of the resin component of the non-foamed resin layer B include polyethylene, polypropylene, polybutene, polybutadiene, polyisoprene, ethylene-methyl acrylate copolymer, ethylene-ethyl acrylate copolymer, ethylene-(meth)acrylic acid copolymer, ethylene-vinyl acetate copolymer, a saponified product of ethylene-vinyl acetate copolymer, and ionomer. From the viewpoint of allowing the sheet to satisfy the above-mentioned tear strength and further, from the viewpoint of allowing the sheet to satisfy both of the above-mentioned tear strength and surface strength, the resin component of the non-foamed resin layer B is preferably ethylene-vinyl acetate copolymer.

In the ethylene-vinyl acetate copolymer used for the non-foamed resin layer B, although the ratio of the vinyl acetate is not particularly restricted, the ratio is, for example, 10 to 46% by mass, preferably 15 to 41 % by mass, per total mass of the ethylene-vinyl acetate copolymer.

Although the thickness of the non-foamed resin layer B is not particularly restricted, the thickness is for example about 3 to 50 µm, preferably about 3 to 20 µm.

Although the method of forming the non-foamed resin layer B is not particularly restricted, the method is, for example, a method of forming the layer by melt-molding, preferably a method of forming the layer by extrusion with a T-die extruder. In particular, it is desirable that, by using a multi-manifold type T-die with which simultaneous film formation of two or more layers is possible by simultaneously extruding molten resins, the foamed resin layer and the non-foamed resin layer B are formed by simultaneous extrusion.

### (3) Non-foamed resin layer A

The non-foamed resin layer A is a layer formed on the upper surface of the foamed resin layer as necessary, for the purpose of vivifying a picture pattern observed when the picture pattern layer is formed or enhancing the scratch resistance of the foamed resin layer, as the layer configuring the resin layer.

Although the resin component of the non-foamed resin layer A is not particularly restricted as long as the sheet can satisfy the above-mentioned tear strength and, as necessary, the above-mentioned surface strength, examples thereof include a polyolefin-based resin, a methacryl-based resin, a thermoplastic polyester-based resin, a polyvinyl alcohol-based resin, and a fluorine-based resin. These resin components may be used alone or may be used in combination of two or more thereof. Among these resin components, a polyolefin-based resin is preferred.

Specifically, examples of the polyolefin-based resin include polyethylene, polypropylene, polybutene, polybutadiene, polyisoprene, ethylene-methyl acrylate copolymer, ethylene-ethyl acrylate copolymer, ethylene-(meth)acrylic acid copolymer, ethylene-vinyl acetate copolymer, a saponified product of ethylene-vinyl acetate copolymer, and ionomer. Among them, from the viewpoint of allowing the sheet to satisfy the above-mentioned tear strength, and further, from the viewpoint of allowing the sheet to satisfy both of the above-mentioned tear strength and surface strength, ethylene-(meth)acrylic acid copolymer is preferred.

In the ethylene-(meth)acrylic acid copolymer used for the non-foamed resin layer A, although the ratio of the (meth)acrylic acid is not particularly restricted, the ratio is, for example, 5 to 15% by mass, preferably 11 to 15% by mass, per total mass of the ethylene-(meth)acrylic acid copolymer.

Although the thickness of the non-foamed resin layer A is not particularly restricted, the thickness is for example about 3 to 30 µm, preferably about 3 to 15 µm.

Although the method of forming the non-foamed resin layer A is not particularly restricted, the method is, for example, a method of forming the layer by melt-molding, preferably a method of forming the layer by extrusion with a T-die extruder. It is especially desirable to use a multi-manifold type T-die to simultaneously extrude the foamed resin layer and the non-foamed resin layer B for forming. Moreover, in the case where three layers of the non-foamed resin layer A, the foamed resin layer and the non-foamed resin layer B are provided, it is desirable to use a multi-manifold type T-die with which simultaneous film formation of three layers is possible, simultaneously extruding these three layers for forming.

### (4) Picture pattern layer

The picture pattern layer is a layer formed on the upper surface of the foamed resin layer (or the non-foamed resin layer A) as necessary, for the purpose of imparting designability to the foamed layered sheet (I), as the layer configuring the resin layer.

Examples of the picture pattern include a woodgrain pattern, a marble grain pattern, a pebbly pattern, a tiled pattern, a brick-masonry pattern, a cloth pattern, a tiedyed leather pattern, a geometric figure, a letter, a symbol, and an abstraction pattern. The picture pattern can be appropriately selected according to the use of a foamed layered sheet.

For example, the picture pattern layer can be formed by printing the picture pattern. Examples of the printing method include gravure printing, flexographic printing, silk screen printing, and offset printing. As the printing ink, a printing ink containing a coloring agent, a binding material resin, a solvent (or a dispersing medium), and the like can be used. As these inks, known or commercially available ones may be used.

Although the coloring agent is not particularly restricted, for example, such a pigment used for the previously mentioned foamed resin layer may be appropriately used.

The binding material resin needs only to be appropriately set according to the kind of a base material sheet and examples thereof include an acryl-based resin, a styrene-based resin, a polyester-based resin, a urethane-based resin, a chlorinated polyolefin-based resin, a vinyl chloride-vinyl acetate copolymer-based resin, a polyvinyl butyral resin, an alkyd-based resin, a petroleum-based resin, a ketone resin, an epoxy-based resin, a melamine-based resin, a fluorine-based resin, a silicone-based resin, a cellulose derivative, and a rubber-based resin. These binding material resins may be used alone or may be used in combination of two or more thereof.

Although the solvent (or the dispersing medium) is not particularly restricted, examples thereof include petroleum-based organic solvents such as hexane, heptane, octane, toluene, xylene, ethylbenzene, cyclohexane and methylcyclohexane; ester-based organic solvents such as ethyl acetate, butyl acetate, 2-methoxyethyl acetate and 2-ethoxyethyl acetate; alcohol-based organic solvents such as methyl alcohol, ethyl alcohol, normal propyl alcohol, isopropyl alcohol, isobutyl alcohol, ethylene glycol and propylene glycol; ketone-based organic solvents such as acetone, methyl ethyl ketone, methyl isobutyl ketone and cyclohexanone; ether-based organic solvents such as diethyl ether, dioxane and tetrahydrofuran; chlorine-based organic solvents such as dichloromethane, carbon tetrachloride, trichloroethylene and tetrachloroethylene; and water. These solvents (or dispersing media) may be used alone or may be used in combination of two or more thereof.

Although the thickness of the picture pattern layer can be appropriately set according to the kind of the picture pattern and the like, the thickness is for example about 0.1 to 10 µm.

### (5) Surface protective layer

The surface protective layer is a layer formed on the upper surface of the picture pattern layer, as necessary, in the case where the picture pattern layer is formed, in view of imparting stain resistance, the control of the luster on the surface of the picture pattern layer, the protection of the picture pattern layer, and the like, as the layer configuring the resin layer.

With regard to the resin component used for the formation of the surface protective layer, a resin component capable of satisfying the above-mentioned tear strength and, as necessary, the above-mentioned surface strength, may be appropriately selected from known resin components such as a thermoplastic resin and a curable resin.

Examples of the thermoplastic resin used for the formation of the surface protective layer include a polyolefin resin, an acryl-based resin, a polyvinyl alcohol-based resin, and a fluorine-based resin. Among these thermoplastic resins, from the viewpoint of effectively allowing the sheet to satisfy the above-mentioned tear strength, an ethylene-(meth)acrylic acid-based copolymer resin such as an ethylene-acrylic acid copolymer resin, an ethylene-methyl acrylate copolymer resin, an ethylene-ethyl acrylate copolymer resin, and an ethylene-methacrylic acid copolymer resin, an ethylene-vinyl acetate copolymer (EVA), a saponified product of an ethylene-vinyl acetate copolymer resin, an ionomer, and polyolefin resins such as ethylene copolymers including ethylene-olefin copolymers are preferred. These thermoplastic resins may be used alone or may be used in combination of two or more thereof. Moreover, in the case where a crosslinkable thermoplastic resin such as an ethylene copolymer is used for the formation of the surface protective layer, the thermoplastic resin may be subjected to a crosslinking treatment as necessary.

Moreover, with regard to the curable resin used for the formation of the surface protective layer, the type of the curing reaction is not particularly restricted as long as the sheet can satisfy the above-mentioned tear strength and, as necessary, the above-mentioned surface strength, and, for example, any one of an ordinary temperature-curable resin, a thermosetting resin, an ionizing radiation curable resin, a one-pack type curable resin, a two-pack type curable resin, an ionizing radiation curable resin, and the like is acceptable, and a one-pack type curable resin is preferred. As the curable resin, from the viewpoint of effectively allowing the sheet to satisfy the above-mentioned tear strength and, as necessary, the above-mentioned surface strength, an acryl-based resin, a urethane-based resin, and the like are preferred, and a one-pack type curable acryl-based resin is further preferred. These curable resins may be used alone or may be used in combination of two or more thereof. Moreover, in the case where the curable resin is used for the formation of the surface protective layer, in order to promote the curing reaction, a crosslinking agent, a polymerization initiator, a polymerization accelerator, and the like may be used as necessary.

Moreover, the surface protective layer may be a layer made of a single layer and may be a layer in which two or more layers which are the same or different are layered. For example, the structure of the layer may be a double layered structure in which a layer formed from a cured resin is formed as the outermost layer and a layer formed from the thermoplastic resin is layered as the lower layer thereof.

Although the thickness of the surface protective layer is not particularly restricted, the thickness is for example I to 20 µm, preferably 1 to 5 µm.

With regard to the formation of the surface protective layer, a method corresponding to the kind of the resin component to be used may be employed. For example, in the case of forming the surface protective layer using the thermoplastic resin, the formation may be performed by applying a thermoplastic resin film previously formed on the surface of the picture pattern layer or may be performed by allowing the thermoplastic resin to be formed into a film on the surface of the picture pattern layer. Moreover, in the case of forming the surface protective layer using the curable resin, the formation is performed by applying a resin composition prepared by mixing the thermosetting resin and various additives as necessary to the foamed resin layer (or the non-foamed resin layer A or the picture pattern layer) by a method such as gravure coating, bar coating, roll coating, reverse roll coating and comma coating, and then drying and curing the resin composition by heating and the like as necessary.

### (6) Uneven pattern

To the surface (the surface of the opposite side to the fibrous base material) of the foamed layered sheet (I) according to the invention, in order to impart designability, an uneven pattern by emboss processing may be applied as necessary. The emboss processing may be performed by a known means such as the action of pressing with an embossed plate. The uneven pattern is not particularly restricted, and examples thereof include woodgrain vessel channel, stone board surface unevenness, cloth surface texture, satin finished surface, grain, hairline, and linear streak.

### Method of producing foamed layered sheet (I)

Although the foamed layered sheet (I) according to the present invention is produced by appropriately adjusting the composition and the thickness of each layer and the layered structure so that the sheet can satisfy the above-mentioned tear strength and, as necessary, the above-mentioned surface strength, examples of the production procedure thereof will be described below. However, the method of producing the foamed layered sheet (I) according to the present invention should not be construed as being limited to the contents mentioned below. In this connection, in the following description of the production method, with regard to the method of forming each layer configuring the foamed layered sheet (I) according to the present invention, the contents already described will be omitted.

First, a resin layer including at least a foaming agent-containing resin layer is layered on a fibrous base material. In the case where a non-foamed resin layer A and/or a non-foamed resin layer B are provided as the resin layer, it is desirable to simultaneously extrude the non-foamed resin layer A, the foaming agent-containing resin layer and the non-foamed resin layer B using a multi-manifold type T-die for forming.

Although the cylinder temperature and the die temperature on subjecting the foaming agent-containing resin layer to extrusion forming with a T-die extruder may be appropriately set according to the kind of resin components to be used and the like, these temperatures are generally about 100 to 140°C.

Then, as the resin layer, a surface protective layer is layered with a picture pattern layer interposed as necessary. In the formation of the surface protective layer, in the case where a curable resin is used, a heat treatment, a crosslinking treatment, and the like are performed according to the type of the curing reaction of the resin, thereby to cure the curable resin. Moreover, in the case where a crosslinkable thermoplastic resin such as an ethylene-based copolymer is used in the surface protective layer, the thermoplastic resin may also be subjected to the crosslinking treatment as necessary.

Thus, a non-foamed layered sheet in which the resin layer is layered on the fibrous base material is prepared. The resin layer is formed into a layered structure having a stack of non-foamed resin layer B provided as necessary/ foamed resin layer/non-foamed resin layer A provided as necessary/picture pattern layer provided as necessary/surface protective layer provided as necessary in this order.

Afterward, the foamed layered sheet (I) according to the present invention is produced by allowing the foaming agent-containing resin layer in the resin layer of the obtained non-foamed layered sheet to foam.

Although the heating condition on allowing the foaming agent-containing resin layer to foam is not particularly restricted, for example, the heating temperature is about 210 to 240°C and the heating period is about 20 to 80 seconds.

Before allowing the foaming agent-containing resin layer to foam, in order to adjust the melt tension of the foaming agent-containing resin layer and readily attain a desired expansion ratio, the foaming agent-containing resin layer may be subjected to a crosslinking treatment as necessary. As previously described, in the case where the surface protective layer is provided and the surface protective layer is subjected to a crosslinking treatment, crosslinking for the foaming agent-containing resin layer and crosslinking for the surface protective layer may be simultaneously performed.

Moreover, the foamed layered sheet (I) according to the present invention may be subjected to emboss processing to shape the sheet to form an uneven pattern on the surface thereof. The emboss processing may be performed by a known means such as an embossed plate. Specifically, by bringing the foamed resin layer and the surface protective layer provided as necessary to a state of being heated and softened and thereafter pressing with an embossed plate, the sheet can be shaped to form a desired emboss pattern thereon.

### Use

The foamed layered sheet (1) according to the present invention is suitably used as a decorative sheet for covering an adherend such as a wall surface or a ceiling surface. In other words, a decorative plate is provided by pasting the foamed layered sheet (I) according to the present invention onto an adherend. In this connection, in the present invention, a "decorative sheet" refers to a covering sheet for covering the surface of an adherend irrespective of the presence or absence of imparting a design effect such as a picture. Further, in the present invention, a "decorative plate" refers to a board in which the above decorative sheet is pasted on the surface of the adherend.

Specifically, the adherend of the foamed layered sheet (I) according to the present invention may be, for example, a backing board for interior finishing. The backing board for interior finishing may be a wooden substrate or a non-wooden substrate. Examples of the wooden substrate include wooden-based plates such as a sliced veneer plate, a wood-material single plate, a wood-material plywood, a particle board, and a middle density fiber plate (MDF) of various materials such as Japanese cedar, Japanese cypress, Japanese zelkova, pine tree, lauan, teakwood, and melapi. Further, examples of the non-wooden substrate include inorganic plates such as a concrete plate and a stone plate, a plastic plate, and a gypsum board. These substrates may be made of one sheet of a substrate or made by layering two or more sheets of substrates. Since the foamed layered sheet (I) according to the present invention is suitably used as a decorative sheet for a wall surface or a ceiling surface, the adherend thereof is preferably a backing board for interior finishing for a wall surface or a ceiling surface, for example.

Further, since the foamed layered sheet (I) according to the invention is provided with an excellent backing displacement following ability, the function of following the positional displacement at a joint part of a backing board for interior finishing caused by an earthquake is enhanced, so that the sheet can be used also as a decorative sheet for finishing the wall of an earthquake-resistant structure. The "earthquake-resistant structure" is provided with a strength capable of withstanding an earthquake and is a structure designed to absorb the earthquake vibration by rather positively swaying instead of eliminating the swaying caused by the earthquake, so that the earthquake-resistant structure is differentiated from the vibration control structure and from the base isolation structure.

Further, as an adhesive used for pasting the foamed layered sheet (I) according to the invention and the adherend to each other, adhesives such as starch-based, urea-based, vinyl acetate resin-based, urea resin-based, melamine resin-based, phenol resin-based, and isocyanate-based adhesives can be used, and the adhesives are used alone or as a mixed type adhesive obtained by arbitrary mixing. The adhesives can be used by adding and mixing an inorganic powder such as talc, calcium carbonate, clay, or titanium white, a wheat powder, a wood powder, a plastic powder, a coloring agent, an insect repellent, an antifungal agent, or the like as necessary.

Application of the adhesive can be performed using an application apparatus such as a spray, a spreader, or a bar coater. Generally, while setting the content of the solid component in the adhesive to be 35 to 80% by mass, the adhesive is applied onto the adherend or onto the fibrous base material surface of the foamed layered sheet (I) according to the present invention with an application amount being in a range of 50 to 300 g/m².

As described before, pasting of the foamed layered sheet (I) according to the present invention onto the adherend is usually performed by a method of forming an adhesive layer on a back surface of the decorative sheet and pasting the adherend, a method of applying the adhesive onto the adherend and pasting the decorative sheet, or the like method. For pasting the decorative sheet, a pasting apparatus such as a cold press, a hot press, a roll press, a laminator, lapping, an edge pasting machine, or a vacuum press may be used, or alternatively, pasting (construction on the spot) by a construction artisan may be performed.

A decorative plate obtained by pasting the foamed layered sheet (I) according to the present invention onto an adherend is used as a wall material, a ceiling surface material, or the like.

### 2. Foamed layered sheet (II)

The present invention further provides a foamed layered sheet obtained by layering a resin layer including at least a foamed resin layer on a fibrous base material, wherein the foamed resin layer contains one kind or two or more kinds of resin component (1) selected from the group consisting of olefin copolymer containing at least α,β unsaturated carboxylic acid anhydride as a constituent comonomer and polyethylene, and one kind or two or more kinds of resin component (2) selected from the group consisting of olefin-carboxylic acid vinyl ester copolymer and olefin-α,β unsaturated carboxylic acid ester copolymer. In the present specification, the foamed layered sheet may be denoted as "foamed layered sheet (II)".

The layered structure in the foamed layered sheet (II) according to the present invention is as described in the "foamed layered sheet (I)" section given before.

The foamed layered sheet (II) according to the present invention is characterized in that, in the foamed resin layer included in the resin layer, the above-mentioned resin components (1) and (2) are used in combination. By forming the foamed resin layer using such a combination of specific resin components, the sheet can be allowed to have both of an excellent backing displacement following ability and an excellent scratch resistance. Moreover, the foamed layered sheet (II) according to the present invention can also be provided with an excellent stain resistance by adopting the foamed resin layer having such a specific composition.

In the foamed layered sheet (II) according to the present invention, the kinds of the resin components used as the resin components (1) and (2), the ratio of these, the suitable combination of the resin components (1) and (2), and the like are as described in the "1. Foamed layered sheet (I)" section given before. Further, the components other than the resin components blended in the foamed resin layer, the content thereof, the thickness of the foamed resin layer, and the like are also as described in the "1. Foamed layered sheet (I)" section given before.

Further, in the foamed layered sheet (II) according to the present invention, with respect to the fibrous base material and the layers other than the foamed resin layer disposed as resin layers in accordance with the needs, the composition, the thickness, and the like thereof are also as described in the "1. Foamed layered sheet (I)" section given before.

Further, the production method, the use, and the like of the foamed layered sheet (II) according to the present invention are also as described in the "1. Foamed layered sheet (I)" section given before.

### 3. Non-foamed layered sheet (I)

The present invention further provides a non-foamed layered sheet (which may be denoted as non-foamed layered sheet (I)) in which a resin layer including at least a non-foamed resin layer (foaming agent-containing resin layer) containing a resin component and a foaming agent is layered on a fibrous base material, wherein, after the non-foamed resin layer is foamed to form a foamed layered sheet, the foamed layered sheet satisfies conditions that the displacement from the first maximum point of the tensile strength in the width direction to the second maximum point thereof in the foamed layered sheet when measured at a tensile speed of 3 mm/minute in the testing method for tear strength of sheeting defined in JIS K77128-3 is 1 to 5 mm.

The non-foamed layered sheet (I) is used as a material roll for producing the above-mentioned foamed layered sheet (I), and the layer structure, the composition of each layer, and the like thereof are the same as those of the foamed layered sheet (I) except that, in the foamed layered sheet (I), the foamed resin layer in the resin layer is replaced with the non-foamed resin layer (foaming agent-containing resin layer). In other words, the foamed layered sheet (I) is produced by foaming the non-foamed resin layer (foaming agent-containing resin layer) in the non-foamed layered sheet (I).

The non-foamed layered sheet (I) needs only to be set so as to satisfy the above-mentioned range of displacement after the foaming treatment. For example, in the case in which the non-foamed resin layer (foaming agent-containing resin layer) is foamed under foaming conditions such that the thickness thereof will be an expansion ratio of 4 to 10 times, the sheet needs only to satisfy the above-mentioned range of displacement after foaming under any of the foaming conditions within the range of expansion ratio.

### 4. Non-foamed layered sheet (II)

The present invention further provides a non-foamed layered sheet (which may be denoted as non-foamed layered sheet (II)) in which a resin layer including at least a non-foamed resin layer containing a resin component and a foaming agent is layered on a fibrous base material, wherein the resin component contains at least one kind of resin component (1) selected from the group consisting of unsaturated carboxylic acid anhydride copolymer and polyethylene, and at least one kind of resin component (2) selected from the group consisting of olefin-carboxylic acid vinyl ester copolymer and olefin-α,β unsaturated carboxylic acid ester copolymer. The non-foamed layered sheet (II) is used as a material roll for producing the above-mentioned foamed layered sheet (II), and the layer structure, the composition of each layer, and the like thereof are the same as those of the foamed layered sheet (II) except that, in the foamed layered sheet (II), the foamed resin layer in the resin layer is replaced with the foaming agent-containing resin layer. In other words, the foamed layered sheet (II) is produced by foaming the foaming agent-containing resin layer in the non-foamed layered sheet (II).

### EXAMPLES

The present invention will be described below in detail with reference to Examples and Comparative Examples. However, the present invention is not limited to the Examples.

### [Production of foamed layered sheet]

### Examples 1 to 6

Using a T-die extruder for 3 kinds of 3 layers, the extrusion amounts were adjusted so that a stack of non-foamed resin layer A/foaming agent-containing resin layer/non-foamed resin layer B in this order had a thickness of 5 µm/65 µm/5 µm, and a resin sheet (resin layer) with a three-layered structure was formed. With regard to the extrusion conditions, each of the cylinder temperatures was set to 120°C and each of the die temperatures was also set to 120°C. The foaming agent-containing resin layer in the resin sheet obtained remained in an unfoamed state. Both ends of the resin layer obtained were slit, providing a sheet with a width of 960 mm. In this connection, the non-foamed resin layer A, the foaming agent-containing resin layer, and the non-foamed resin layer B were each formed using the resin composition having a composition shown in Table 1.

Then, a wallpaper base ("WK-665", produced by KJ Special Paper Co., Ltd.) made of paper pulp with a width of 970 mm was heated so that the sheet temperature was 120°C. The wallpaper base and the resin sheet were laminated together so that the non-foamed resin layer B of the resin sheet was brought into contact with the wallpaper base, were passed through a laminate roll, and were subjected to thermocompression bonding to obtain a layered body. In this case, they were laminated together by arranging the resin sheet at the center of the wallpaper base, and 5 mm of both end parts of the wallpaper base were allowed to remain in a state of not being laminated with the resin sheet.

Afterward, by irradiating the resin sheet surface of the layered body obtained with an electron beam under the conditions of an acceleration voltage of 195 kV and an irradiation dose of 30 kGy, the foaming agent-containing resin layer in the resin sheet was subjected to a crosslinking treatment.

Then, the surface (non-foamed resin layer A) of the layered body was subjected to a corona discharge treatment, after which, with a gravure printing machine, using an aqueous ink ("Hydric", produced by Dainichiseika Color & Chemicals Mfg. Co., Ltd.) for picture printing, a cloth pattern picture was printed to form a picture pattern layer (having a thickness of about 2 µm). Afterward, with a gravure printing machine, on the picture pattern layer, an aqueous ink (ALTOP-402B, produced by Dainichiseika Color & Chemicals Mfg. Co., Ltd., acryl-based one-pack curing type resin) was printed to form a surface protective layer (having a thickness of about 2 µm).

Next, while the layered body obtained was being heated (at 220°C for 35 seconds) in an oven, the foaming agent-containing resin layer was allowed to foam so as to form a foamed resin layer, and together, by pressing a metal roll having a woven fabric-like pattern onto the surface protective layer, the layered body was embossed to obtain a foamed layered sheet.

The thickness of the layered sheet obtained was 600 µm; the mass per unit area of the resin layer (total of non-foamed resin layer B, foamed resin layer, non-foamed resin layer A, picture pattern layer, and surface protective layer) in the layered sheet was 91.4 g/m²; and the density of the resin layer (non-foamed resin layer A, foaming agent-containing resin layer, non-foamed resin layer B, picture pattern layer, and surface protective layer) was 0.18 g/cm³. In this connection, the density of the resin layer was calculated by calculating the volume from the foamed sheet cross-sectional area per unit length and dividing the mass of resin by the volume.

**[TABLE 1]**

| | Contained components | Manufacturer, trade name | Example | | | | | |
|---|---|---|---|---|---|---|---|---|
| | | | 1 | 2 | 3 | 4 | 5 | 6 |
| Non-Foamed resin layer A | ethylene-methacrylic acid copolymer | produced by DUPONT-MITSUI POLYCHEMICALS CO., LTD., trade name: Nucrel N1560 | 100 | 100 | 100 | 100 | 100 | 100 |
| | ethylene-vinyl acetate copolymer | produced by DUPONT-MITSUI POLYCHEMICALS CO., LTD., trade name: Evaflex EV150 (mass ratio of ethylene:vinyl acetate 67:33) | 70 | - | 70 | - | - | - |
| | | produced by TOSOH CORPORATION, trade name: Ultrathene 640 (mass ratio of ethylene:vinyl acetate 75:25) | - | 70 | - | - | - | - |
| | | produced by DUPONT-MITSUI POLYCHEMICALS CO., LTD., trade name: Evaflex EV450 (mass ratio of ethylene:vinyl acetate 81:199) | - | - | - | 65 | - | - |
| | linear low density polyethylene | produced by Japan Polyethylene Corporation, trade name: KERNEL KC580S | 30 | 30 | | | | |
| | | produced by Ube-Maruzen Polyethylene Co., LTD., trade name: UMERIT 631A | - | - | 30 | - | - | - |
| Foamed resin layer | ethylene-maleic anhydride-methyl acrylate copolymer | produced by Japan Polyethylene Corporation, trade name: REXPEARL ET440H | - | - | - | 35 | 35 | 35 |
| | ethylene-methyl acrylate copolymer | produced by Japan Polyethylene Corporation, trade name: REXPEARL EMA EB440H (mass ratio of ethylene:methyl acrylate 80:20)) | - | - | - | - | 65 | - |
| | ethylene-methyl methacrylate copolymer | produced by Sumitomo Chemical Company, Limited, trade name: ACRYFT WH401 (mass ratio of ethylene:methyl methacrytate 80:20) | - | - | - | - | - | 65 |
| | calcium carbonate | produced by Shiraishi Kogyo Kaisha, Ltd., trade name: Whiton PC | 30 | 30 | 30 | 30 | 30 | 30 |
| | coloring agent | produced by ISHIHARA SANGYO KAISHA, LTD., trade name: TIPAQUE CR-63 | 30 | 30 | 30 | 30 | 30 | 30 |
| | foaming agent | produced by Otsuka Chemicals Co., Ltd., trade name: AZ ULTRA 3050I | 4 | 4 | 4 | 4 | 4 | 4 |
| | foaming auxiliary | produced by ADEKA CORPORATION. trade name: ZNS-P | 2.7 | 2.7 | 2.7 | 2.7 | 2.7 | 2.7 |
| | crosslinking auxiliary | produced by Shin-Nakamura Chemical Co., Ltd., trade name: A-DCP | 0.3 | 0.3 | 0.3 | 0.3 | 0.3 | 0.3 |
| Non-foamed resin layer B | ethylene-vinyl acetate copolymer resin | produced by TOSOH CORPORATION, trade name: Ultrathene 750 | 100 | 100 | 100 | 100 | 100 | 100 |

| | | | | | | | | |
|---|---|---|---|---|---|---|---|---|
| In the Table, the unit of the blending amount of each contained component is "parts by mass". | | | | | | | | |

### Comparative Example 1

In Comparative Example 1, a foamed layered sheet was produced under the same conditions as in the above-mentioned Examples except that the non-foamed resin layer A, the foaming agent-containing resin layer, and the non-foamed resin layer B were each formed by using a resin composition having a composition shown in Table 2 and that the crosslinking treatment on the foaming agent-containing resin layer was performed by electron beam irradiation under conditions with an acceleration voltage of 195 kV and an irradiation dose of 60 kGy.

### Comparative Examples 2 and 3

In Comparative Examples 2 and 3, a foamed layered sheet was produced under the same conditions as in the above-mentioned Examples except that the non-foamed resin layer A, the foaming agent-containing resin layer, and the non-foamed resin layer B were each formed by using a resin composition having a composition shown in Table 2.

**[TABLE 2]**

| | Contained components | Manufacturer, trade name | Comparative Example | | |
|---|---|---|---|---|---|
| | | | 1 | 2 | 3 |
| Non-Foamed resin layer A | ethylene-methacrylic acid copolymer | produced by DUPONT-MITSUI POLYCHEMICALS CO., LTD., trade name: Nucrel N1560 | 100 | - | - |
| Foamed resin layer | ethylene-methacrylic acid copolymer | produced by DUPONT-MJTSUI POLYCHEMICALS CO.. LTD., trade name: Nucrel N1110H | 100 | - | - |
| | linear low density polyethylene | produced by Ube-Maruzen Polyethylene Co., LTD., trade name: 631A | - | 100 | - |
| | ethylene-maleic anhydride-methyl acrylate copolymer | produced by Japan Polyethylene Corporation, trade name: REXPEARL ET440H | - | - | 100 |
| | calcium carbonate | produced by Shiraishi Kogyo Kaisha, Ltd., trade name: Whiton PC | 30 | 30 | 30 |
| | coloring agent | produced by ISHIHARA SANGYO KAISHA, LTD., trade name: TIPAQUE CR-63 | 30 | 30 | 30 |
| | foaming agent | produced by Otsuka Chemical Co.. Ltd., trade name: AZ ULTRA 3050I | 5 | 4 | 4 |
| | foaming auxiliary | produced by Otsuka Chemical Co., Ltd., trade name: ADHS | 5 | - | - |
| | | produced by ADEKA CORPORATION, trade name: ZNS-P | - | 2.7 | 2.7 |
| | crosslinking auxiliary | produced by Shin-Nakamura Chemical Co., Ltd., trade name: A-DCP | - | 0.3 | 0.3 |
| Non-foamed resin layer B | ethylene-vinyl acetate copolymer resin | produced by TOSOH CORPORATION, trade name: Ultrathene 750 | 100 | 100 | 100 |

| | | | | | |
|---|---|---|---|---|---|
| In the Table, the unit of the blending amount of each contained component is "parts by mass". | | | | | |

### Comparative Example 4

A plastisol of a resin composition made of 100 parts by mass of vinyl chloride ("PQB83", produced by Shin Dai-ichi Vinyl Corporation), 38 parts by mass of a plasticizing agent ("DINP", produced by CG ESTER CORPORATION), 21 parts by mass of a coloring agent ("DE-24", produced by NIKKO BICS CO., LTD.), 3 parts by mass of a foaming agent ("VINYFOR AC#3", produced by EIWA CHEMICAL IND. CO., LTD.), 3.25 parts by mass of a stabilizing agent ("ADK STAB FL-47", produced by ADEKA CORPORATION), 2 parts by mass of a stabilizing agent ("ADK STAB O-111", produced by ADEKA CORPORATION), 18.1 parts by mass of a diluent ("Shellsol S", produced by Shell Chemicals Japan Ltd.), and 90 parts by mass of calcium carbonate ("Whiton H", produced by Shiraishi Kogyo Kaisha, Ltd.) was prepared. The plastisol was applied onto a paper surface of a wallpaper base ("WK-665", produced by KJ Special Paper Co., Ltd.) made of paper pulp with a width of 970 mm using a comma coater, and was allowed to turn into a semi-gel in a drying furnace at 150°C to obtain a layered body in which a foaming agent-containing resin layer was layered on the wallpaper base. The thickness of the foaming agent-containing resin layer of the layered body obtained was 110 µm.

Then, on the foaming agent-containing resin layer surface of the resin sheet obtained, with a gravure printing machine, using an aqueous ink ("Hydric", produced by Dainichiseika Color & Chemicals Mfg. Co., Ltd.) for picture printing, a cloth pattern picture was printed to form a picture pattern layer (having a thickness of about 2 µm). Afterward, with a gravure printing machine, on the picture pattern layer, an aqueous ink (ALTOP-402B, produced by Dainichiseika Color & Chemicals Mfg. Co., Ltd., acryl-based one-pack curing type resin) was printed to form a surface protective layer (having a thickness of about 2 µm).

Next, while the layered body obtained was being heated (at 220°C for 35 seconds) in an oven, the foaming agent-containing resin layer was allowed to foam so as to form a foamed resin layer, and together, by pressing a metal roll having a woven fabric-like pattern onto the surface protective layer, the layered body was embossed to obtain a layered sheet. The thickness of the layered sheet obtained was 650 µm; the mass per unit area of the resin layer (total of foamed resin layer, picture pattern layer, and surface protective layer) in the layered sheet was 91.0 g/m²; and the density of the resin layer (foamed resin layer, picture pattern layer, and surface protective layer) was 0.14 g/cm³.

### [Evaluation of physical property value and performance of foamed layered sheet]

### Test for tear strength of sheeting defined in JIS K7128-3

By performing a test for tear strength of sheeting defined in JIS K7128-3, each foamed layered sheet obtained as above was measured for the displacement from the first maximum point of the tensile strength in the width direction to the second maximum point thereof. Specifically, the measurement was performed by the following procedure.

First, each foamed layered sheet was cut into a shape shown in Figure 2 and stored at a temperature of 23±2°C and a relative humidity of 50±5% for 88 hours or more. Then, with a TENSILON universal testing machine (produced by ORIENTEC Co., LTD., model number: RTC-1250A), the tensile speed and the distance between grippers were set to 3 mm/minute and 80 mm, respectively, and the test for tear strength was performed. The correlation between tensile distance and tensile strength was measured and the displacement from the first maximum point of the tensile strength in the width direction to the second maximum point thereof was determined. In this connection, the test for tear strength was performed in an environment having a temperature of 23±2°C and a relative humidity of 50±5%.

### Breakage resistance against positional displacement of backing

Each of the foamed layered sheets obtained as above was evaluated for the breakage resistance against positional displacement of backing in the following manner.

Two gypsum boards ("TIGER BOARD", manufactured by Yoshino Gypsum Co., Ltd.) with a square of 99 mm × 99 mm and a thickness of 9.5 mm were prepared. With their sides of two gypsum boards snugly abutted, each of the foamed layered sheets was pasted with a starch-based adhesive so as to cover the whole face of two gypsum boards. In this case, the flow direction of the foamed layered sheet (direction perpendicular to the width direction of a wallpaper base) was set so as to be parallel to the sides of two gypsum boards abutted.

Then, drying was performed at room temperature to allow the gypsum board and the foamed layered sheet to sufficiently bond together, after which, in the direction perpendicular to the sides of two gypsum boards abutted, the two gypsum boards were pulled apart to allow a clearance of 1.5 mm, 2.0 mm or 2.5 mm to be generated at the abutted portion of the two gypsum boards. On that occasion, the foamed layered sheet was observed for the visual appearance and evaluated according to the following criteria.

### <Criteria for judgement in visual appearance of layered sheet>

○: No breakage of the layered sheet was observed.
Δ: Cracks are observed partially on the resin surface of the layered sheet.
×: The layered sheet at the abutted portion of the two gypsum boards is completely ruptured.

### Scratch resistance

With respect to each of the foamed layered sheets obtained as above, the scratch resistance was evaluated by performing a test according to the surface-reinforced wallpaper performance specification defined by the Wallpaper Industry Association. Specifically, measurement was carried out according to the following procedure.

Each of the foamed layered sheets was cut into a shape of 30 mm × 250 mm and was stored for 24 hours or more at a temperature of 20±10°C and a relative humidity of 65±20%, so as to be used as a test piece. The scratch resistance was measured by using a friction tester II type ("Color Fastness Rubbing Tester", produced by TESTER SANGYO CO., LTD.) defined in JIS L 0849; however, as a frictioner, the claw and the holder shown in Fig. 3 were used. The frictioner of the friction tester II type was mounted so that the tip end surface of the claw would be horizontal to the test piece support and would not move in the right-and-left direction. The test piece was pasted by using a two-sided tape on the fibrous sheet surface of the test piece so as to be parallel to the reciprocating direction of the frictioner, and was firmly fixed to the test piece support so that the test piece would not move. Thereafter, the frictioner was quietly placed on the test piece, and was reciprocated for 5 times with a travel distance of 120 mm at a reciprocating speed of 30 times per minute. In this connection, the load of the frictioner was set to be 2 N (200 gf), and the tip end dimension of the claw was set to be 4.0 mm × 2.0 mm with the start side: R 0.15 mm (±0.03 mm) and the return side: R 0.20 mm (±0.03 mm). Further, the present test was performed in an environment having a temperature of 20±10°C and a relative humidity of 65±20%.

With respect to the longitudinal direction and the transverse direction of each test piece, the degree of wound on each test piece surface was confirmed by eye inspection after the test was carried out under the above-mentioned conditions, and an evaluation of scratch resistance was performed according to the following criteria for judgement.

### <Criteria for judgement of scratch resistance>

5th class: no change has occurred.
4th class: a little change has occurred on the surface.
3rd class: the surface is seen to be torn.
2nd class: the surface is torn, and the fibrous base material is seen (length is less than 1 cm).
1st class: the surface is torn, and the fibrous base material is seen (length is 1 cm or more).

### Stain resistance

With respect to each of the foamed layered sheets obtained as above, the scratch resistance was evaluated by performing a test according to the surface-reinforced wallpaper performance specification defined by the Wallpaper Industry Association. Specifically, measurement was carried out according to the following procedure.

To each of the foamed layered sheets, staining substances (coffee, soy sauce, red crayon, water-based felt-tip pen) were each allowed to adhere. After 24 hours, each of the staining substances was wiped out. In this connection, coffee and soy sauce were wiped out by using water, and red crayon and water-based felt-tip pen were wiped out by using a neutral detergent. Subsequently, the visual appearance after removal of each staining substance was observed by eye inspection, and the stain resistance was evaluated according to the following criteria for judgement.

### <Criteria for judgement of stain resistance>

5th class: no stain remains.
4th class: little stain remains.
3rd class: a little stain remains.
2nd class: considerable stain remains.
1st class: dense stain remains.

### Evaluation results

The obtained results are shown in Table 3. As will be clear from the results of Examples 1 to 6, when the displacement from the first maximum point of tensile strength to the second maximum point thereof in the above-mentioned test for tear strength is 1 to 5 mm, the backing displacement following ability is good, and the sheet has an excellent breakage resistance against the positional displacement of backing, and further, it has been made clear that also the scratch resistance can be sufficiently satisfied. Also, in Examples 1 to 6, the sheet was provided with an excellent scratch resistance as well.

Further, as will be clear from the results of Examples 1 to 6, it has been confirmed that the sheet can be provided with an excellent backing displacement following ability and scratch resistance also by using a combination of polyethylene and/or unsaturated carboxylic acid anhydride-containing ethylene copolymer and ethylene-carboxylic acid vinyl ester copolymer and/or ethylene-unsaturated carboxylic acid ester copolymer as a resin component that forms the foamed resin layer in the foamed layered sheet. Also, in Examples 1 to 6, the sheet was provided with an excellent stain resistance as well.

On the other hand, as will be clear from Comparative Examples 1 to 4, the foamed layered sheets in which the displacement from the first maximum point of tensile strength to the second maximum point thereof in the above-mentioned test for tear strength was less than 1 mm were inferior in the backing displacement following ability.

**[TABLE 3]**

| | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| Displacement in width direction from first maximum point to second maximum point in test for tear strength (mm) | | 2.94 | 2.32 | 1.86 | 1.10 | 1.31 | 1.29 | 0.66 | 0.76 | 0.65 | 0.45 |
| Breakage resistance against positional displacement of backing | Clearance between gypsum boards: 1.5 mm | ○ | ○ | ○ | ○ | ○ | ○ | ○ | ○ | ○ | ○ |
| | Clearance between gypsum boards: 2.0 mm | ○ | ○ | ○ | ○ | ○ | ○ | × | Δ | × | × |
| | Clearance between gypsum boards: 2.5 mm | ○ | ○ | ○ | ○ | ○ | ○ | × | × | × | × |
| Scratch resistance | | 4th class | 4th class | 4th class | 4th class | 4th class | 4th class | 4th class | 4th class | 4th class | 1th class |
| Stain resistance | coffee | 4th class | 4th class | 4th class | 4th class | 4th class | 4th class | 4th class | 4th class | 4th class | 1th class |
| | soy sauce | 5th class | 5th class | 5th class | 5th class | 5th class | 5th class | 5th class | 5th class | 5th class | 1th class |
| | red crayon | 4th class | 4th class | 4th class | 4th class | 4th class | 4th class | 4th class | 4th class | 4th class | 2nd class |
| | water-based pen | 4th class | 4th class | 4th class | 4th class | 4th class | 4th class | 4th class | 4th class | 4th class | 2nd class |

## Claims

1. A foamed layered sheet obtained by layering a resin layer including at least a foamed resin layer on a fibrous base material, wherein
the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm.

2. The foamed layered sheet according to claim 1, wherein further a test result obtained by the surface-reinforced wallpaper performance specification defined by the Wallpaper Industry Association is in the fourth or higher class.

3. The foamed layered sheet according to claim 1 or 2, wherein the resin layer contains two or more kinds of resin component selected from the group consisting of polyethylene, olefin-carboxylic acid vinyl ester copolymer, olefin-α,β unsaturated carboxylic acid ester copolymer, and olefin copolymer containing at least α,β unsaturated carboxylic acid anhydride as a constituent comonomer.

4. The foamed layered sheet according to any one of claims 1 to 3, wherein the foamed resin layer contains one kind or two or more kinds of resin component (1) selected from the group consisting of olefin copolymer containing at least α,β unsaturated carboxylic acid anhydride as a constituent comonomer and polyethylene, and one kind or two or more kinds of resin component (2) selected from the group consisting of olefin-carboxylic acid vinyl ester copolymer and olefin-α,β unsaturated carboxylic acid ester copolymer.

5. The foamed layered sheet according to any one of claims 1 to 4, wherein the foamed resin layer contains one kind or two or more kinds of resin component (1) selected from the group consisting of polyethylene and ethylene-maleic anhydride-methyl acrylate copolymer, and one kind or two or more kinds of resin component (2) selected from the group consisting of ethylene-vinyl acetate copolymer, ethylene-methyl methacrylate copolymer, and ethylene-methyl acrylate copolymer.

6. The foamed layered sheet according to any one of claims 1 to 5, wherein the resin layer has a layered structure obtained by disposing a non-foamed resin layer on an upper surface and/or lower surface of the foamed resin layer.

7. The foamed layered sheet according to any one of claims 1 to 6, wherein the resin layer has a layered structure obtained by disposing a non-foamed resin layer, a foamed resin layer, a non-foamed resin layer, a picture pattern layer, and a surface protective layer in this order.

8. The foamed layered sheet according to any one of claims 1 to 7, which is a decorative sheet to be pasted onto a wall surface or a ceiling surface.

9. A decorative plate obtained by pasting the foamed layered sheet according to any one of claims 1 to 8 onto an adherend.

10. The decorative plate according to claim 9, which is a wall material or a ceiling material.

11. Use of a foamed layered sheet obtained by layering a resin layer including at least a foamed resin layer on a fibrous base material, wherein the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm, as a decorative sheet.

12. A method for producing a foamed layered sheet in which the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm,
the method comprising a step of using a non-foamed layered sheet in which a resin layer including at least a foaming agent-containing resin layer containing a resin component and a foaming agent is layered on a fibrous base material, and foaming the foaming agent-containing resin layer.

13. A non-foamed layered sheet in which a resin layer including at least a foaming agent-containing resin layer containing a resin component and a foaming agent is layered on a fibrous base material, wherein,
after the foaming agent-containing resin layer is foamed to form a foamed layered sheet, the foamed layered sheet satisfies conditions that the displacement from the first maximum point of the tensile strength in the width direction to the second maximum point thereof in the foamed layered sheet when measured at a tensile speed of 3 mm/minute in the testing method for tear strength of sheeting defined in JIS K7128-3 is 1 to 5 mm.

14. The non-foamed layered sheet according to claim 13, wherein, after the foaming agent-containing resin layer is foamed to form the foamed layered sheet, the foamed layered sheet satisfies conditions such that a test result obtained by the surface-reinforced wallpaper performance specification defined by the Wallpaper Industry Association is in the fourth or higher class.
